# EUROPEAN PATENT APPLICATION

(11) **EP 2 899 847 A1**
(43) Date of publication of application: **29.07.2015**
(21) Application number: 13838102.5
(22) Date of filing: 04.09.2013
(51) Int. Cl.: H02J 17/00, B60L 5/00, B60L 11/18, B60M 7/00, H02J 7/00

(54) **POWER RECEIVING DEVICE AND CONTACTLESS POWER TRANSMISSION DEVICE**

(30) Priority: 18.09.2012 JP 2012204581
(71) Applicant: KABUSHIKI KAISHA TOYOTA JIDOSHOKKI, Kariya-shi, Aichi 448-8671 (JP)
(72) Inventor: KATSUNAGA, Hiroshi, Kariya-shi, Aichi 448-8671 (JP); KOIKE, Tsuyoshi, Kariya-shi, Aichi 448-8671 (JP); TAGUCHI, Yuichi, Kariya-shi, Aichi 448-8671 (JP); TOGANO, Hiroki, Kariya-shi, Aichi 448-8671 (JP); MATSUKURA, Keisuke, Kariya-shi, Aichi 448-8671 (JP); TSUNEKAWA, Yuki, Kariya-shi, Aichi 448-8671 (JP); ONO, Takuma, Kariya-shi, Aichi 448-8671 (JP)
(74) Representative: TBK
(86) International application number: PCT/JP2013/073839
(87) International publication number: WO 2014/045874

(57) **Abstract**

A power-receiving device (21) includes a secondary coil (23a), which wirelessly receives AC power from a power-supply device (11) having a primary coil (13a), a variable load (22), in which an impedance changes in accordance with the power value of the input power, a PFC circuit (24) having a first switching element (33), and a DC/DC converter (25) having a second switching element (41). The PFC circuit (24) rectifies the AC power received by the secondary coil (23a) and improves the power factor by adjusting the duty cycle in switching operation of the first switching element in accordance with the impedance fluctuation of the variable load. The DC/DC converter (25) is configured to convert the voltage of the DC power obtained through rectification to a different voltage and output the converted voltage to the variable load, and to adjust the duty cycle in switching operation of the second switching element in accordance with the impedance fluctuation of the variable load.

## Description

### TECHNICAL FIELD

The present disclosure relates to a power-receiving device and a wireless power transfer device.

### BACKGROUND ART

Conventionally, wireless power transfer devices that do not use power cords or transfer cables have been proposed. These include, for example, devices that use magnetic field resonance. For example, a wireless power transfer device disclosed in Japanese Laid-Open Patent Publication No. 2009-106136 includes a power-supply device that has an AC power source and a primary resonance coil that receives AC power from the AC power source. The wireless power transfer device of the publication further includes a power-receiving device that has a secondary resonance coil capable of producing magnetic field resonance with the primary resonance coil. The wireless power transfer device of the publication transmits AC power from the power-supply device to the power-receiving device through magnetic field resonance between the primary resonance coil and the secondary resonance coil. The AC power transmitted to the power-receiving device is rectified into DC power with a rectifier mounted on the power-receiving device and is input to a vehicle battery. Thus, the vehicle battery is charged.

### PRIOR ART DOCUMENTS

### Patent Documents

Patent Document 1: Japanese Laid-Open Patent Publication No. 2009-106136

### SUMMARY OF THE INVENTION

### Problems that the Invention is to Solve

Vehicle batteries have a variable load in which the impedance fluctuates in accordance with the power value of the received DC power. Such a structure may reduce the transfer efficiency due to the impedance fluctuation of the variable load. The above-mentioned circumstance applies not only to the structure that performs wireless power transfer by magnetic field resonance, but also to the structure that performs wireless power transfer by electromagnetic induction.

### Means for Solving the Problems

Accordingly, it is an objective of the present disclosure to provide a power-receiving device that favorably corresponds to fluctuation in the impedance of a variable load and a wireless power transfer device that includes the power-receiving device.

In accordance with one aspect of the present disclosure, a power-receiving device is provided that includes a secondary coil, a variable load, a PFC circuit, and a DC/DC converter. The secondary coil is capable of receiving AC power without contact from a power-supply device including a primary coil to which AC power is input. In the variable load, an impedance fluctuates in accordance with a power value of an input electric power. The PFC circuit includes a first switching element that performs switching operation with a predetermined period. The DC/DC converter includes a second switching element that performs switching operation with a predetermined period. The PFC circuit is configured to rectify AC power received by the secondary coil and improve a power factor by adjusting a duty cycle in switching operation of the first switching element to correspond to the impedance fluctuation of the variable load. The DC/DC converter is configured to convert a voltage of DC power obtained through rectification by the PFC circuit to a different voltage, output the converted voltage to the variable load, and adjust a duty cycle in switching operation of the second switching element to correspond to the impedance fluctuation of the variable load.

According to this aspect, the duty cycle in the switching operation of the first switching element is adjusted to correspond to the impedance fluctuation of the variable load to restrain decrease in the power factor due to the impedance fluctuation of the variable load. The duty cycle in the switching operation of the second switching element is also adjusted to correspond to the impedance fluctuation of the variable load to restrain decrease in the transfer efficiency due to the impedance fluctuation of the variable load. The present disclosure favorably corresponds to the impedance fluctuation of the variable load.

According to one form of the disclosure, the duty cycle in the switching operation of the first switching element is adjusted such that a phase of an envelope of a current that flows through the PFC circuit approaches a phase of an envelope of a voltage corresponding to the current in accordance with the impedance fluctuation of the variable load. The duty cycle in the switching operation of the second switching element is adjusted such that a real part of an impedance from an input end of the PFC circuit to the variable load is constant in accordance with the impedance fluctuation of the variable load. According to this aspect, if the impedance of the variable load fluctuates, the power factor is maintained high. Also, even if the impedance of the variable load fluctuates, the real part of the impedance from the input end of the PFC circuit to the variable load is constant. This restrains decrease in the transfer efficiency due to the impedance fluctuation of the variable load.

According to one form of the disclosure, a wireless power transfer device includes a power-supply device including a primary coil to which AC power is input and the above described power-receiving device. According to this aspect, the wireless power transfer device favorably corresponds to the impedance fluctuation of the variable load.

In accordance with another aspect of the present disclosure, a power-receiving device is provided that includes a secondary coil, a load, a PFC circuit, and a DC/DC converter. The secondary coil is capable of receiving AC power without contact from a power-supply device including a primary coil to which AC power is input. The PFC circuit includes a first switching element that performs switching operation with a predetermined period. The PFC circuit is configured to rectify AC power received by the secondary coil. The DC/DC converter includes a second switching element that performs switching operation with a predetermined period. The DC/DC converter is configured to convert a voltage of DC power obtained through rectification by the PFC circuit to a different voltage and output the converted voltage to the load. A duty cycle of the switching operation of the first switching element is set to improve a power factor. A duty cycle in the switching operation of the second switching element is set such that a real part of an impedance from an input end of the PFC circuit to the load is equal to a predetermined specific value.

In the power-receiving device, the load is not limited to one in which the impedance fluctuates in accordance with an input power value like the vehicle battery. The load in which the impedance is constant regardless of the input power value may be employed.

Other aspects and advantages of the discloser will become apparent from the following description, taken in conjunction with the accompanying drawings, illustrating by way of example the principles of the disclosure.

### BRIEF DESCRIPTION OF THE DRAWINGS

The features of the present disclosure that are believed to be novel are set forth with particularity in the appended claims. The disclosure, together with objects and advantages thereof, may best be understood by reference to the following description of the presently preferred embodiments together with the accompanying drawings in which:
Fig. 1 is a circuit diagram of a wireless power transfer device according to a first embodiment; and
Fig. 2 is a circuit diagram of a wireless power transfer device according to a second embodiment.

### MODES FOR CARRYING OUT THE INVENTION

### First Embodiment

A wireless power transfer device (wireless power transfer system) according to the present disclosure will now be described.

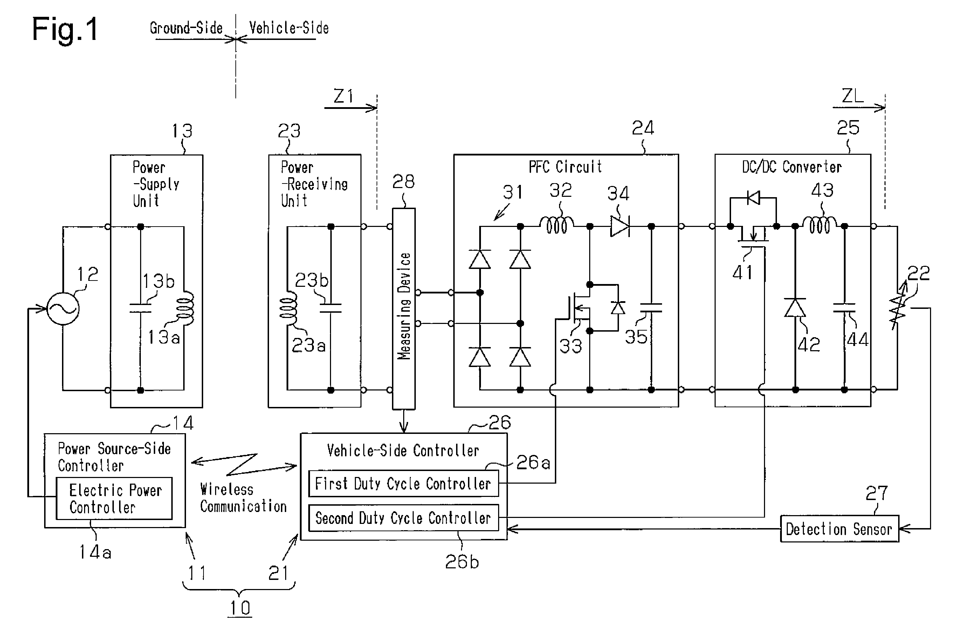

As shown in Fig. 1, a wireless power transfer device 10 includes a ground-side device 11 provided on the ground and a vehicle-side device 21 mounted on a vehicle. The ground-side device 11 corresponds to a power-supply device (primary device), and the vehicle-side device 21 corresponds to a power-receiving device (secondary device).

The ground-side device 11 includes a high-frequency power source 12 (AC power source) that is capable of outputting high-frequency power (AC power) having a predetermined frequency. The high-frequency power source 12 is configured to convert electric power input from an infrastructure, or a system power supply, into high-frequency power and to be capable of outputting the converted high-frequency power.

The high-frequency power output from the high-frequency power source 12 is transmitted to the vehicle-side device 21 without contact and is input to a vehicle battery 22 provided in the vehicle-side device 21. More specifically, the wireless power transfer device 10 includes a power-supply unit 13 (primary resonance circuit) provided in the ground-side device 11 and a power-receiving unit 23 (secondary resonance circuit) provided in the vehicle-side device 21 as devices for transmitting power between the ground-side device 11 and the vehicle-side device 21.

The power-supply unit 13 and the power-receiving unit 23 have the same structure and are configured to be capable of causing magnetic field resonance. More specifically, the power-supply unit 13 is formed by a resonance circuit including a primary coil 13a and a primary capacitor 13b connected in parallel. The power-receiving unit 23 is formed by a resonance circuit including a secondary coil 23a and a secondary capacitor 23b connected in parallel. The resonant frequencies of the power-supply unit 13 and the power-receiving unit 23 are set to be equal.

Such a structure permits the power-supply unit 13 and the power-receiving unit 23 (secondary coil 23a) to cause magnetic field resonance when high-frequency power is received by the power-supply unit 13 (primary coil 13a). Thus, the power-receiving unit 23 receives some of the energy of the power-supply unit 13. That is, the power-receiving unit 23 receives high-frequency power from the power-supply unit 13.

The vehicle-side device 21 is provided with a rectifying unit that rectifies the high-frequency power received by the power-receiving unit 23, which is a PFC circuit 24 in this embodiment. The vehicle-side device 21 is provided with a DC/DC converter 25 that converts the voltage of the DC power obtained through rectification by the PFC circuit 24 to a different voltage level and outputs the converted voltage to the vehicle battery 22. When the DC power output from the DC/DC converter 25 is input to the vehicle battery 22, the vehicle battery 22 is charged.

The vehicle battery 22 is formed by multiple battery cells connected to each other. An impedance ZL of the vehicle battery 22 fluctuates in accordance with the power value of the received DC power. That is, the vehicle battery 22 is a variable load in which the impedance ZL fluctuates in accordance with the power value of the received DC power.

The ground-side device 11 includes a power source-side controller 14 that performs various controls of the ground-side device 11. The power source-side controller 14 includes an electric power controller 14a that performs ON/OFF control and power value control of the high-frequency power that is output from the high-frequency power source 12. The electric power controller 14a is configured to be capable of switching the high-frequency power that is output from the high-frequency power source 12 between charging power and additional charging power having a smaller power value than the charging power. The additional charging power is used for charging the vehicle battery 22, which is formed by battery cells, to compensate for the variation of the capacity of each battery cell.

The vehicle-side device 21 is provided with a vehicle-side controller 26 that is configured to be capable of wirelessly communicating with the power source-side controller 14. The wireless power transfer device 10 starts or ends power transfer by exchanging information between the power source-side controller 14 and the vehicle-side controller 26.

The vehicle-side device 21 is provided with a detection sensor 27 that detects the charge level of the vehicle battery 22. The detection sensor 27 transmits the detected result to the vehicle-side controller 26. Thus, the vehicle-side controller 26 is capable of grasping the charge level of the vehicle battery 22.

When the detection sensor 27 detects that the charge level of the vehicle battery 22 is equal to a predetermined threshold value, the vehicle-side controller 26 transmits a notification accordingly to the power source-side controller 14. Upon receipt of the notification, the electric power controller 14a of the power source-side controller 14 switches the output electric power of the high-frequency power source 12 from the charging power to the additional charging power.

A measuring device 28 is located between the power-receiving unit 23 of the vehicle-side device 21 and the PFC circuit 24. The measuring device 28 measures the electric voltage and current and transmits the measurement results to the vehicle-side controller 26.

The circuit structures of the PFC circuit 24 and the DC/DC converter 25, and the structure for controlling the PFC circuit 24 and the DC/DC converter 25 will be described in detail below.

The PFC circuit 24 is configured such that the high-frequency power received by the power-receiving unit 23 is input via the measuring device 28. The PFC circuit 24 rectifies the received high-frequency power. More specifically, the PFC circuit 24 is a boost chopper-type power factor correction converter and includes a diode bridge 31, which performs full-wave rectification of the high-frequency power. The PFC circuit 24 includes a choke coil 32 and a first switching element 33. The high-frequency power that has been subjected to full-wave rectification by the diode bridge 31 is input to the choke coil 32. The first switching element 33 is connected to the choke coil 32 in parallel. The choke coil 32 has a first end connected to an output end of the diode bridge 31. The first switching element 33 is formed by, for example, an n-type power MOSFET and includes a drain connected to a second end of the choke coil 32 and a grounded source. The PFC circuit 24 includes a diode 34, which prevents reverse flow during rectification, and a capacitor 35 connected in parallel with the diode 34. The anode of the diode 34 is connected to the second end of the choke coil 32 and the drain of the first switching element 33, and the cathode of the diode 34 is connected to the output end of the PFC circuit 24. A first end of the capacitor 35 is connected to the cathode of the diode 34, and a second end of the capacitor 35 is grounded.

The DC/DC converter 25 is a non-insulated step-down chopper in the present embodiment. The DC/DC converter 25 includes a second switching element 41, a diode 42 connected in parallel with the second switching element 41, a coil 43 connected in series with the second switching element 41, and a capacitor 44 connected in parallel with the coil 43. The second switching element 41 is formed by, for example, an n-type power MOSFET.

The drain of the second switching element 41 is connected to the input end of the DC/DC converter 25, that is, the output end of the PFC circuit 24. The source of the second switching element 41 is connected to a first end of the coil 43 and the cathode of the diode 42. The anode of the diode 42 is grounded. A second end of the coil 43 is connected to the vehicle battery 22 via the output end of the DC/DC converter 25. A first end of the capacitor 44 is connected to the second end of the coil 43, and a second end of the capacitor 44 is grounded.

The vehicle-side controller 26 includes a first duty cycle controller 26a that controls the duty cycle (hereinafter, simply referred to as a first duty cycle) of switching operation (ON/OFF) of the first switching element 33. The first duty cycle controller 26a outputs pulse signals of a predetermined period to the gate of the first switching element 33 and controls the first duty cycle. The period of the switching operation of the first switching element 33 is set shorter than the period of the high-frequency power output from the high-frequency power source 12.

The first duty cycle controller 26a controls the first duty cycle such that the power factor is improved. The phrase that "the power factor is improved" means that the voltage phase approaches the phase of current (the power factor approaches "1") or the phase of voltage matches with the phase of current (the power factor is "1 "). More specifically, the current that flows through the choke coil 32 is dependent on the first duty cycle. The first duty cycle controller 26a controls the first duty cycle in every period such that phase of an envelope of the current that flows through the choke coil 32 and the phase of an envelope of the voltage applied to the choke coil 32 approach each other.

The vehicle-side controller 26 includes a second duty cycle controller 26b that controls the duty cycle (hereinafter, simply referred to as a second duty cycle) of switching operation (ON/OFF) of the second switching element 41. The second duty cycle controller 26b outputs pulse signals of a predetermined period to the gate of the second switching element 41 and controls the second duty cycle.

The real part of an impedance Z1 (hereinafter, simply referred to as a load impedance Z1) from the input end of the PFC circuit 24 (measuring device 28) to the vehicle battery 22 is dependent on the real part of the impedance from the input end of the DC/DC converter 25 to the vehicle battery 22. The real part of the impedance from the input end of the DC/DC converter 25 to the vehicle battery 22 is dependent on the second duty cycle. The structure allows the second duty cycle controller 26b to control the second duty cycle such that the real part of the load impedance Z1 is constant. The real part of the load impedance Z1 is the resistance of the load when the load from the input end of the PFC circuit 24 to the vehicle battery 22 is regarded as one.

In a state in which the relative positions of the power-supply unit 13 and the power-receiving unit 23 are at predetermined reference positions, and the high-frequency power output from the high-frequency power source 12 is equal to a certain value (for example, the power value for the charging power), the initial value (reference value) of the duty cycle in the switching operation of the first switching element 33 and the initial value (reference value) of the duty cycle in the switching operation of the second switching element 41 are set such that the real part of the load impedance Z1 is equal to a predetermined specific value and the power factor approaches "1".

The duty cycle controllers 26a, 26b control the duty cycles to correspond to the fluctuation in the impedance ZL of the vehicle battery 22. For example, the duty cycle controllers 26a, 26b variably control the duty cycle when the high-frequency power output from the high-frequency power source 12 is changed from the charging power to the additional charging power on the basis of the measurement results of the measuring device 28.

More specifically, the first duty cycle controller 26a variably controls the first duty cycle on the basis of the measurement results of the measuring device 28 such that the power factor is improved (approaches "1") in accordance with the fluctuation in the impedance ZL of the vehicle battery 22 (more specifically, the reactance of the vehicle battery 22). The second duty cycle controller 26b variably controls the second duty cycle on the basis of the measurement results of the measuring device 28 in accordance with the fluctuation in the impedance ZL of the vehicle battery 22 (more specifically, the resistance of the vehicle battery 22) such that the real part of the load impedance Z1 is constant. In other words, the second duty cycle controller 26b variably controls the second duty cycle such that the real part of the load impedance Z1 is constant in accordance with the fluctuation in the impedance ZL of the vehicle battery 22.

The input voltage (battery voltage) of the vehicle battery 22 is determined by the specification for the vehicle battery 22. The step-down voltage ratio of the DC/DC converter 25 is determined by the second duty cycle. The step-up voltage ratio of the PFC circuit 24 is determined by the first duty cycle, or more specifically, by the amplitude of the current that flows through the choke coil 32. The duty cycles (the step-up voltage ratio and the step-down voltage ratio) are set to improve the power factor and also to restrain the fluctuation in the load impedance Z1.

Operation of the present embodiment will now be described.

When the impedance ZL of the vehicle battery 22 fluctuates, the first duty cycle and the second duty cycle are adjusted. More specifically, the first duty cycle is adjusted (variably controlled) such that the power factor is improved, and the second duty cycle is adjusted (variably controlled) such that the real part of the load impedance Z1 is constant. This prevents decrease in the power factor and thus prevents decrease in the transfer efficiency even if the impedance ZL of the vehicle battery 22 fluctuates.

Focusing on the relationship between the power factor and the imaginary part of the load impedance Z1, the phrase that "the power factor is improved" means that "the imaginary part of the load impedance Z1 approaches "0". The first duty cycle is adjusted to restrain changing of the imaginary part of the load impedance Z1 that accompanies the fluctuation in the impedance ZL of the vehicle battery 22. The imaginary part of the load impedance Z1 is the reactance of the load when the load from the input end of the PFC circuit 24 to the vehicle battery 22 is regarded as one.

The above illustrated embodiment has the following advantages.
(1) The vehicle-side device 21 includes the PFC circuit 24, which has the first switching element 33, and the DC/DC converter 25, which has the second switching element 41. The duty cycle (first duty cycle) in the switching operation of the first switching element 33 is adjusted such that the power factor is improved in accordance with the fluctuation in the impedance ZL of the vehicle battery 22. The duty cycle (second duty cycle) in the switching operation of the second switching element 41 is adjusted such that the real part of the load impedance Z1 becomes constant in accordance with the fluctuation in the impedance ZL of the vehicle battery 22. Thus, improving the power factor can be compatible with restraining decrease in the transfer efficiency.
(2) The preferred embodiment is configured such that the power factor is improved by adjusting the first duty cycle, and the real part of the load impedance Z1 is controlled by adjusting the second duty cycle. Thus, the first and second duty cycles follow the fluctuation in the impedance ZL of the vehicle battery 22 without providing elements such as a variable capacitor.
   In particular, the vehicle battery 22 requires a large charging capacity as compared to, for example, a battery of a cell-phone. Thus, a high-voltage variable capacitor may be required as a comparative example. Such an element may be unrealistic or very costly. Also, since such an element tends to be large, it is hard to provide a space for installation.
   In contrast, the present embodiment adjusts the duty cycles such that the duty cycles favorably follow the fluctuation in the impedance ZL of the vehicle battery 22 and avoids the above-mentioned inconvenience.
(3) In particular, the PFC circuit 24 and the DC/DC converter 25 are employed to follow the fluctuation in the impedance ZL of the vehicle battery 22. Thus, the fluctuation in the impedance ZL of the vehicle battery 22 does not need to be considered in the preceding stage of the PFC circuit 24 (from the high-frequency power source 12 to the power-receiving unit 23). Since the fluctuation does not need to be considered, the structure of each element from the high-frequency power source 12 to the power-receiving unit 23 is simplified.

### Second Embodiment

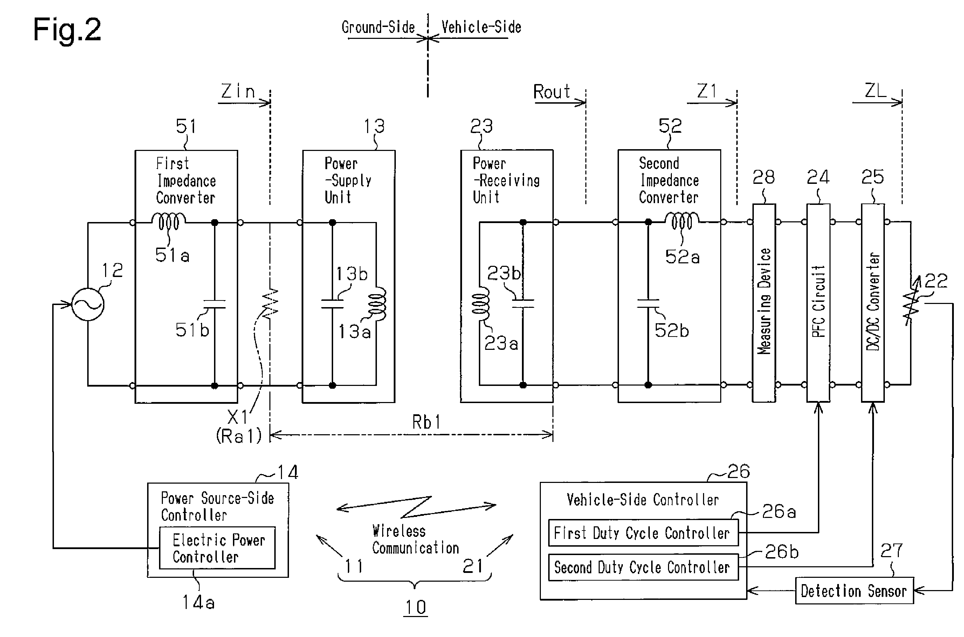

As shown in Fig. 2, the present embodiment includes a ground-side device 11 that has a first impedance converter 51 (primary impedance converter) and a vehicle-side device 21 that has a second impedance converter 52 (secondary impedance converter). The impedance converters 51, 52 will now be described in detail. Like or the same reference numerals are given to those components that are like or the same as the corresponding components of the first embodiment and detailed explanations are omitted.

As shown in Fig. 2, the first impedance converter 51 is located between the high-frequency power source 12 and the power-supply unit 13. The first impedance converter 51 is formed by an LC circuit including a first inductor 51 a and a first capacitor 51 b. The second impedance converter 52 is located between the power-receiving unit 23 and the measuring device 28. The second impedance converter 52 is formed by an LC circuit including a second inductor 52a and a second capacitor 52b.

The present inventors have found that the real part of the impedance from the output end of the power-receiving unit 23 (the secondary coil 23a) to the vehicle battery 22 contributes to the transfer efficiency between the power-supply unit 13 and the power-receiving unit 23. More specifically, the present inventors have found that the real part of the impedance from the output end of the power-receiving unit 23 to the vehicle battery 22 includes a specific resistance value Rout at which the transfer efficiency is relatively high as compared to other (predetermined) resistance values. In other words, the present inventors have found that the real part of the impedance from the output end of the power-receiving unit 23 to the vehicle battery 22 includes a specific resistance value (second resistance value) at which the transfer efficiency is greater than a predetermined resistance value (first resistance value).

The specific resistance value Rout is determined in accordance with, for example, the structure of the power-supply unit 13 and the power-receiving unit 23 and the distance between the power-supply unit 13 and the power-receiving unit 23. The structure of the power-supply unit 13 and the power-receiving unit 23 refers to the shape of the coils 13a, 23a, the inductance of the coils 13a, 23a, and the capacitance of the capacitors 13b, 23b.

More specifically, in a case in which an imaginary load X1 is provided at the input end of the power-supply unit 13, the specific resistance value Rout is expressed by √(Ra1 x Rb1), where Ra1 is the resistance value of the imaginary load X1, and Rb1 is the impedance from the power-receiving unit 23 (more specifically, the output end of the power-receiving unit 23) to the imaginary load X1.

On the basis of the above findings, the second impedance converter 52 converts the load impedance Z1 such that the impedance from the output end of the power-receiving unit 23 to the vehicle battery 22 (the impedance of the input end of the second impedance converter 52) approaches (or more preferably, matches with) the specific resistance value Rout.

The structure allows the PFC circuit 24 to operate such that the power factor approaches "1" in accordance with the fluctuation in the impedance ZL of the vehicle battery 22, and allows the DC/DC converter 25 to operate such that the real part of the load impedance Z1 becomes constant in accordance with the fluctuation in the impedance ZL of the vehicle battery 22.

The first impedance converter 51 converts the impedance Zin from the input end of the power-supply unit 13 to the vehicle battery 22 in a situation in which the impedance from the output end of the power-receiving unit 23 to the vehicle battery 22 approaches the specific resistance value Rout such that the impedance from the output end of the high-frequency power source 12 to the vehicle battery 22 becomes equal to a predetermined value. The impedance from the output end of the high-frequency power source 12 to the vehicle battery 22 may also be referred to as the impedance of the input end of the first impedance converter 51. The "predetermined value" may be, for example, a value that permits obtaining a desired power value.

Operation of the present embodiment will now be described.

The second impedance converter 52 converts the load impedance Z1 such that the impedance from the output end of the power-receiving unit 23 to the vehicle battery 22 (the impedance of the input end of the second impedance converter 52) approaches the specific resistance value Rout at which the transfer efficiency is relatively high. This improves the transfer efficiency.

The structure allows the real part of the load impedance Z1 (the impedance from the input end of the PFC circuit 24 to the vehicle battery 22) to be constant even if the impedance ZL of the vehicle battery 22 fluctuates. Thus, even if the impedance ZL of the vehicle battery 22 fluctuates, the impedance from the output end of the power-receiving unit 23 to the vehicle battery 22 approaches the specific resistance value Rout. This maintains high transfer efficiency even if the impedance ZL of the vehicle battery 22 fluctuates.

In addition to the advantages (1) to (3), the present embodiment provides the following advantage.
(4) The present inventors have found that the real part of the impedance from the output end of the power-receiving unit 23 to the vehicle battery 22 includes the specific resistance value Rout at which the transfer efficiency is relatively high as compared to other resistance values. The specific resistance value Rout is expressed by √(Ra1 x Rb1), where Ra1 is the resistance value of the imaginary load X1, which is provided at the input end of the power-supply unit 13, and Rb1 is the impedance from the power-receiving unit 23 to the imaginary load X1. The second impedance converter 52 is provided that converts the load impedance Z1 such that the impedance from the output end of the power-receiving unit 23 to the vehicle battery 22 approaches the specific resistance value Rout. This improves the transfer efficiency.

The structure of the present embodiment controls the PFC circuit 24 and the DC/DC converter 25 in accordance with the fluctuation in the impedance ZL of the vehicle battery 22. This restrains decrease in the power factor due to the fluctuation in the impedance ZL of the vehicle battery 22 and prevents the impedance from the output end of the power-receiving unit 23 to the vehicle battery 22 from deviating from the specific resistance value Rout due to the fluctuation in the load impedance Z1.

The above illustrated embodiments may be modified as follows.

In the first embodiment, the second duty cycle controller 26b controls such that the real part of the load impedance Z1 is constant in accordance with the fluctuation in the impedance ZL of the vehicle battery 22. However, the embodiment is not limited to this structure. For example, each embodiment may employ an electric power source as the high-frequency power source 12 and control the real part of the load impedance Z1 such that the real part of the load impedance Z1 matches with the real part of the impedance from the output end of the power-receiving unit 23 to the high-frequency power source 12.

In a precise sense, each embodiment adjusts the second duty cycle such that the real part of the impedance from the input end of the measuring device 28 to the vehicle battery 22 is constant. The impedance of the measuring device 28, however, is sufficiently smaller than the impedance from the input end of the PFC circuit 24 to the vehicle battery 22, and the impedance of the measuring device 28 can be ignored.

The first embodiment may set the initial value of the second duty cycle such that the real part of the load impedance Z1 approaches a specific value at which the transfer efficiency is relatively high, which is the specific resistance value Rout.

In the second embodiment, the constant (impedance) of the impedance converters 51, 52 is fixed, but the constant may be variable. In this case, the constant of the impedance converters 51, 52 may be variably controlled in accordance with the variation in the relative positions of the coils 13a, 23a. This maintains high transfer efficiency even if there is a positional displacement in the coils 13a, 23a.

The relative positions of the coils 13a, 23a include not only the distance between the coils 13a, 23a, but also the axial direction of the coils 13a, 23a and the overlapping manner of the coils 13a, 23a. When the power-supply unit 13 and the power-receiving unit 23 are arranged in the up and down direction, the overlapping manner of the coils 13a, 23a may be, for example, the positional displacement of the primary coil 13a and the secondary coil 23a as viewed from the top.

When the constant of the impedance converters 51, 52 is variable, for example, the structure includes, between the second impedance converter 52 (or the measuring device 28) and the PFC circuit 24, a fixed resistor that has a constant resistance value (impedance) regardless of the power value of the input electric power. A relay that switches the connection of the second impedance converter 52 between the fixed resistor and the PFC circuit 24 is provided. When the constant of the impedance converters 51, 52 is variably controlled, the second impedance converter 52 is connected to the fixed resistor.

In a case in which the constant of the impedance converters 51, 52 is variably controlled, each embodiment may be configured to output adjusting electric power that has a smaller power value than the charging power from the high-frequency power source 12. In this case, it is preferred that the resistance value of the fixed resistor be set equal to the initial value of the load impedance Z1.

In the second embodiment, the specific structure of the impedance converters 51, 52 may be modified. For example, the impedance converters 51, 52 may be formed by π-type, T-type LC circuits. The structure does not necessarily have to include the LC circuits, but may include a transformer.

In the second embodiment, the impedance converter is provided in each of the ground-side device 11 and the vehicle-side device 21. However, two impedance converters may be provided in either or both of the ground-side device 11 and the vehicle-side device 21.

In each embodiment, the PFC circuit 24 is a booster chopper-type power factor converter. However, any specific circuit structure that is capable of improving the power factor and rectifying the high-frequency power may be employed, and the PFC circuit 24 may be a step-down circuit.

In each embodiment, the DC/DC converter 25 is a non-insulated step-down chopper. However, the specific circuit structure may be modified, and the DC/DC converter 25 may be a step-up converter.

In each embodiment, the switching elements 33, 41 are formed by the power MOSFETs. However, any elements such as an IGBT may be used.

In each embodiment, each duty cycle is variably controlled on the basis of the measurement results of the measuring device 28. However, each embodiment may previously provide, for example, map data that associates the output electric power of the high-frequency power source 12 with each duty cycle and determine each duty cycle on the basis of the map data.

In the first embodiment, each duty cycle is adjusted when the power value of the high-frequency power output from the high-frequency power source 12 is switched (switched from the charging power to the additional charging power). However, each embodiment may, for example, periodically calculate the transfer efficiency from the measurement results of the measuring device 28 and adjust each duty cycle when the calculated transfer efficiency is less than or equal to a predetermined threshold value of efficiency. Instead of the transfer efficiency, the charge level of the vehicle battery 22 may serve as a criterion for adjusting the duty cycles.

In each embodiment, the duty cycle controllers 26a, 26b, which control the duty cycles, are provided in the vehicle-side controller 26. However, the duty cycle controllers 26a, 26b may be provided in the power source-side controller 14 and may also be provided separately from the vehicle-side controller 26 and the power source-side controller 14. That is, the main constituents for controlling the duty cycles may be changed.

In each embodiment, the second duty cycle is adjusted such that the real part of the load impedance Z1 is constant. However, each embodiment may adjust the second duty cycle in a manner so as to, for example, permit the real part of the load impedance Z1 to fluctuate within a predetermined permissible range. In this case, the second duty cycle is easily adjusted.

Similarly, the power factor may be permitted to fluctuate within a predetermined permissible range. In this case, the first duty cycle is easily adjusted.

The voltage waveform of the high-frequency power output from the high-frequency power source 12 may be, for example, a pulse waveform or a sinusoidal wave.

The high-frequency power source 12 may be an electric power source, a voltage source, or a current source. The voltage source may be a voltage source (switching power source) in which the internal resistance can be ignored (0 Ω) or a voltage source having a predetermined internal resistance (for example, 50 Ω).

The high-frequency power source 12 may be omitted. In this case, the system electric power is input to the power-supply unit 13.

In each embodiment, the capacitors 13b, 23b are provided, but the capacitors 13b, 23b may be omitted. In this case, magnetic field resonance is produced using the parasitic capacitance of the coils 13a, 23a.

In each embodiment, the resonant frequency of the power-supply unit 13 and the resonant frequency of the power-receiving unit 23 are set to be equal. However, the resonant frequency of the power-supply unit 13 may be different from the resonant frequency of the power-receiving unit 23 within a range that permits electric power transfer.

In each embodiment, the magnetic field resonance is used to achieve wireless electric power transfer. However, an electromagnetic induction may be used.

In each embodiment, the wireless power transfer device 10 is applied to a vehicle, but may be applied to other devices. For example, the wireless power transfer device 10 may be applied to charge a battery of a cell-phone.

The power-supply unit 13 may be formed by the resonance circuit, which includes the primary coil 13a and the primary capacitor 13b, and a primary induction coil joined to the resonance circuit by electromagnetic induction. In this case, the resonance circuit receives high-frequency power by electromagnetic induction from the primary induction coil. Similarly, the power-receiving unit 23 may be formed by the resonance circuit, which includes the secondary coil 23a and the secondary capacitor 23b, and a secondary induction coil joined to the resonance circuit by electromagnetic induction. The high-frequency power may be obtained from the resonance circuit of the power-receiving unit 23 using the secondary induction coil.

### DESCRIPTION OF THE REFERENCE NUMERALS

10...wireless power transfer device, 11...ground-side device (power-receiving device), 12...high-frequency power source, 13a...primary coil, 21...vehicle-side device (power-supply device), 22...vehicle battery (variable load), 23a...secondary coil, 24...PFC circuit, 25...DC/DC converter, 26a...first duty cycle controller, 26b...second duty cycle controller, 28...measuring device, 33...first switching element, 41...second switching element.

## Claims

1. A power-receiving device, comprising:
a secondary coil capable of receiving AC power without contact from a power-supply device including a primary coil to which AC power is input;
a variable load in which an impedance fluctuates in accordance with a power value of an input electric power;
a PFC circuit including a first switching element that performs switching operation with a predetermined period; and
a DC/DC converter including a second switching element that performs switching operation with a predetermined period, wherein
the PFC circuit is configured to rectify AC power received by the secondary coil and improve a power factor by adjusting a duty cycle in switching operation of the first switching element to correspond to the impedance fluctuation of the variable load, and
the DC/DC converter is configured to convert a voltage of DC power obtained through rectification by the PFC circuit to a different voltage, output the converted voltage to the variable load, and adjust a duty cycle in switching operation of the second switching element to correspond to the impedance fluctuation of the variable load.

2. The power-receiving device according to claim 1, wherein
the duty cycle in the switching operation of the first switching element is adjusted such that an phase of an envelope of a current that flows through the PFC circuit approaches an phase of an envelope of a voltage corresponding to the current in accordance with the impedance fluctuation of the variable load, and
the duty cycle in the switching operation of the second switching element is adjusted such that a real part of an impedance from an input end of the PFC circuit to the variable load is constant in accordance with the impedance fluctuation of the variable load.

3. The power-receiving device according to claim 1 or 2, wherein
a real part of an impedance from an output end of the secondary coil to the variable load includes a specific resistance value at which transfer efficiency is relatively higher than other resistance values, and
the power-receiving device further includes a secondary impedance converter located between the secondary coil and the PFC circuit, wherein the secondary impedance converter converts the impedance from the output end of the secondary coil to the variable load to approach the specific resistance value.

4. The power-receiving device according to any one of claims 1 to 3, wherein
the duty cycle in the switching operation of the first switching element is adjusted in accordance with fluctuation in an imaginary part of the impedance of the variable load, and
the duty cycle in the switching operation of the second switching element is adjusted in accordance with fluctuation in a real part of the impedance of the variable load.

5. A wireless power transfer device, comprising:
a power-supply device including a primary coil to which AC power is input; and
the power-receiving device according to any one of claims 1 to 4.

6. A power-receiving device, comprising:
a secondary coil capable of receiving AC power without contact from a power-supply device including a primary coil to which AC power is input;
a load;
a PFC circuit including a first switching element that performs switching operation with a predetermined period, and the PFC circuit is configured to rectify AC power received by the secondary coil; and
a DC/DC converter including a second switching element that performs switching operation with a predetermined period, and the DC/DC converter is configured to convert a voltage of DC power obtained through rectification by the PFC circuit to a different voltage and output the converted voltage to the load, wherein
a duty cycle of the switching operation of the first switching element is set to improve a power factor, and
a duty cycle in the switching operation of the second switching element is set such that a real part of an impedance from an input end of the PFC circuit to the load is equal to a predetermined specific value.

7. A wireless power transfer device, comprising:
a power-supply device including a primary coil to which AC power is input; and
the power-receiving device according to claim 6.
